# EUROPEAN PATENT SPECIFICATION

(11) **EP 3 655 244 B1**
(45) Date of publication and mention of the grant of the patent: **11.05.2022**
(21) Application number: 18733867.8
(22) Date of filing: 25.06.2018
(51) Int. Cl.: B32B 5/02, B27N 3/06, B32B 5/16, B32B 7/02, B32B 7/12, B32B 21/02, B32B 21/04, B32B 21/06, B32B 21/08, B32B 21/10, B32B 27/06, B32B 29/04, B32B 3/26

(54) **WOOD PARTICLE BOARD**
HOLZSPANPLATTE
PANNEAU DE PARTICULES DE BOIS

(30) Priority: 19.07.2017 SE 1750950
(43) Date of publication of application: 27.05.2020
(73) Proprietor: IKEA Supply AG, 4133 Pratteln (CH)
(72) Inventor: KUVIK, Libor, 919 43 Cífer (SK)
(74) Representative: Ström & Gulliksson AB
(86) International application number: PCT/EP2018/066905
(87) International publication number: WO 2019/015916

(56) References cited:
- WO-A1-99/32285
- FR-A1- 2 281 214
- FR-A1- 2 312 363
- US-A- 4 045 262

## Description

### BACKGROUND OF THE INVENTION

### 1. Field of the Invention

The present invention relates to a wood particle board. An example of a wood particle board may comprise a core layer composed of wood particles with large flake size which is sandwiched between two surface layers composed of wood particles with particle sizes smaller than the flake sizes of the core layer.

### 2. Background of the Invention

Common wood particle boards, which are currently particularly used in the furniture manufacturing industry, consist of multiple layers of wood particles wherein the different layers may be constituted of particles of different sizes. In particular, a surface layer may be composed of wood particles of fine particle sizes, and a core layer may contain wood particles with large particle sizes. However, depending on the intended use of the wood particle board, the wood particle sizes in the respective layers of the board may be chosen differently. For example, for structural boards used in flooring or in the wood building industry, while there may still be need for providing a reasonably smooth surface, the composition and number of the layers may be chosen according to the requirements of the respective intended use. In the manufacturing process, the wood particles are usually mixed or coated with a bonding agent and then deposited to form the desired layers. The layers are then compressed under high pressure and heat to form a particle board.

The large wood flakes of the core layer are relatively loosely packed with air pockets formed between the flakes, which typically has a rough surface texture. Therefore, a surface layer composed of smaller particles is used to provide at least one smooth and even outer surface. Wood particle boards are typically constructed in a symmetrical manner, comprising an uneven number of layers with two respective outer surface layers and one or more core layers. The quality of the surface is particularly important for the furniture manufacturing industry.

In order to ensure a low overall weight of the board, it is desirable to use relatively thin surface layers. However, some smaller surface layer particles may fall into gaps between the larger core layer particles, so that, with a thin surface layer, the surface roughness may increase.

WO 99/32285 A1 discloses a particle board consisting of one or more layers of wood chips impregnated with condensation resins. A woven, bonded or non-woven fabric consisting of natural fibres is arranged inside or between the individual layers of glued wood chips.

The invention is defined in the appended claims. The object of the present invention is to provide a wood particle board with an even surface.

In the context of the present disclosure, the term "wood particle board" is used as a generic term for any panel product that is made at least partly from wood particles, such as e.g. a particle board, OSB, flake board, chip board, wafer board, etc.. Further, the term "wood particle board" of the present disclosure may also encompass boards with a fibre based core and particle board surface layers, or boards which may e.g. comprise a core from wooden wool covered by fine particle board layers.

A wood particle board according to the present invention comprises a core layer, which may e.g. be composed of wood particles with large particle size, and at least one surface layer, which may e.g. be composed of wood particles with particle sizes smaller than the particle sizes of the core layer. Thus, a lightweight wood particle board with a smooth surface is formed. However, the present disclosure is not limited to such flake boards, but may encompass other types of wood particle boards made from different types of wood particle or wood fibre material.

Typically, wood particle boards are formed in a symmetrical manner with two surface layers on the outside and one or more core layers sandwiched therebetween. However, it is conceivable that, for specific applications, a wood particle board with an asymmetric construction and only one surface layer may be used, so that a core layer is only covered on one of its sides by a separate surface layer.

At least one interfoil is disposed between a surface layer and the core layer. The interfoil layer can e.g. prevent wood particles to fall from the surface layer into the core layer. Thus, the thickness of the surface layer can be reduced compared to prior art particle boards, while ensuring a smooth and even surface of the wood particle board. The interfoil is formed of paper which has not been resin impregnated or of a perforated plastic sheet, and has a surface weight in the range of 5 g/m² to 600 g/m² and a thickness in the range of 0.05 to 3 mm.

During manufacture, the wood particle board with the interfoil positioned between the core layer and a surface layer can be cured under pressure, using e.g. a hot press, cold press or a high frequency electric current curing method.

Thus, a wood particle board as defined above achieves a uniform cover of a coarse core layer (such as e.g. a core layer of a flake board, OSB or wafer board) by a surface layer, even if the surface layer is fairly thin. In case the core layer is made of flakes such as for a OSB based, or wafer based board, such a uniform cover is extremely difficult to achieve with prior art methods. Thus, according to embodiments, a lightweight wood particle board can be provided, since the thickness of the heavy surface layers can be reduced due to the presence of the interfoil.

Further, the presence of the interfoil allows to reduce the amount of surface layer used, while the manufactured wood particle board can be still within the density range of a standard particleboard, or even a high density board.

The interfoil has the additional effect that it ensures that both surfaces of the wood particle board can be produced with the same quality. In typical prior art wood particle boards, the top surface tends to be of lower quality and generally more material is used to form a top surface for a given surface quality. Thus, a wood particle board according to an embodiment allows to increase the surface quality for applications with high demands, such as e.g. thin foils or direct printing.

It has further been found that the provision of an interfoil between a core layer and a top surface layer allows to manufacture the wood particle board faster and with higher quality edges when compared to a prior art wood particle board. This may be due to the interfoil balancing forces on the particle mat in a hot press and thus allowing a faster and better quality pressing step of the deposited wood particle mat to form the finished wood particle board. Further, the interfoil may influence the swelling of particles during a hot pressing step and may improve the swelling behaviour compared to a prior art wood particle board without an interfoil.

According to embodiments, the interfoil may be permeable to vapour. If a cold pressing process is employed, it is not necessary for the interfoil to have vapour permeability. However, if a hot press is used, the vapour-permeable interfoil allows moisture or steam to escape from the core layer during hot pressing and subsequent cooling. Alternatively, a thermoplastic interfoil without permeability might be used, since such an interfoil will be cracked or melted during hot pressing and will thus form no barrier for vapours escaping from any core or surface layer.

According to some embodiments, a wood particle board may be provided wherein only one interfoil is provided between a core layer and one of the surface layers of the wood particle board. According to alternative embodiments, the wood particle board may comprise two interfoils arranged on opposite surfaces of the core layer. Thus, for some applications, wood particle boards with two smooth surfaces can be provided. Additionally, the overall stability and mechanical properties of a wood particle board can be improved by the provision of two interfoils on either side of a core layer. Therein, the thickness, density and mechanical properties of the interfoil may be selected according to the desired mechanical properties of the finished wood particle board.

The interfoil of the present invention may be adhered to the core and surface layers by an adhesive agent provided in the core and surface layers. Thus, it may not be necessary to provide additional adhesive agents on the interfoil. The interfoil is formed of paper which has not been resin impregnated or of a perforated plastic sheet.

The interfoil of the present invention has a surface weight in the range of 5-600 g/m², preferably 5-200 g/m², most preferably 5-60 g/m², and a thickness in the range of 0.05-3 mm, preferably 0.05-2.5 mm, most preferably 0.05-2.0 mm.

The core layer may have a density below 500 kg/m³ and the surface layer may have a density above 700 kg/m³. Hence, a lightweight wood particle board can be provided. Due to the provision of the interfoil, a high surface quality can be ensured even if the surface layers are fairly thin.

The present invention also relates to a method for producing a wood particle board. As a first step, wood particle sizes with a small particle size and an adhesive agent are deposited to form a first surface layer. Thereon, wood particles with a large particle size and an adhesive agent are deposited to form a core layer. Next, an interfoil is provided on top of the core layer, wherein the interfoil may be permeable to vapour. The interfoil may be provided as an endless sheet in order to allow for a continuous manufacturing process. After the interfoil has been placed onto the core layer, wood particles with particle sizes smaller than the particle sizes of the core layer and an adhesive agent are deposited to form at least one surface layer. Finally, the deposited layers are compressed to form a wood particle board.

Thus, the small particles of the surface layer are prevented from entering the core layer by the provision of the interfoil. Additionally, since the interfoil may be vapour permeable, the wood particle board can be manufactured using a conventional continuous hot pressing procedure, wherein the interfoil allows steam and vapour to pass through the wood particle board during pressing and cooling. For other manufacturing methods, such as e.g. cold pressing or high frequency electric current curing, it may not be necessary to provide a vapour permeable interfoil.

Therein, the wood particles may be coated with an adhesive agent before the steps of depositing the wood particles are performed.

According to embodiments, the interfoil may be adhered to the core and surface layers by the adhesive agent provided in the core and surface layers. Thus, it is not necessary to provide an additional adhesive agent on the interfoil layer.

According to embodiments, before depositing the wood particles and adhesive agent of the core layer, a first interfoil may be deposited directly onto the first surface layer, wherein the core layer may be deposited on top of the first interfoil. Subsequently, a second interfoil may be provided on top of the core layer, and a second surface layer may be deposited on top of the second interfoil.

In this way, a wood particle board comprising two surface layers on either side of a core layer may be formed, wherein a respective interfoil is positioned between each surface layer and the core layer. Thus, a wood particle board can be provided for applications wherein a board with two high-quality surfaces is needed. Additionally, with a suitable choice of interfoil material, the mechanical properties of the wood particle board can be improved by the addition of two interfoil layers on either side of the core layer.

### BRIEF DESCRIPTION OF THE DRAWINGS

Fig. 1 shows a schematic representation of a first embodiment of the present invention of a particle board.
Fig. 2 shows a schematic representation of a second embodiment of the present invention of a particle board.
Fig. 3 shows an example of a dual density wood particle board wherein an interfoil as shown in Fig. 1 or 2 may be used.
Fig. 4 is a schematic illustration of the application of adhesive onto interfoil layers during manufacture of a wood particle board according to an embodiment of the present invention.

### DETAILED DESCPRIPTION OF THE PREFERRED EMBODIMENTS

For manufacture of a particle board according to one of the embodiments described in detail below, layers of adhesive-coated wood particles are formed. Therein, different layers typically comprise wood particles with different properties, and the layers are deposited on top of each other. In the embodiments as described below, at least one interfoil is placed between two layers of deposited wood particles. Subsequent to the formation of the particle layers and the provision of the interfoil between two particle layers, at least one curing or pressing process takes place, which may include simultaneous heating and pressing. The heating and pressure activates the adhesive agent which seeks out any available moisture. The adhesive agent bonds throughout all layers, then sets to provide a strong bond between wood particles as well as wood particles and the interfoil. Moreover, pressing is applied to consolidate the layers and develop the internal structure of the wood particle board, including the final density profile of the wood particle board. The pressing may either be performed as a continuous process, wherein particle layers are continuously deposited and conveyed through a hot-press apparatus, or pressing may be performed as a batch process, wherein a layered particle structure of a predetermined size is placed in a hot press apparatus where it remains stationary during the pressing.

After pressing, the wood particle board may be cooled and trimmed to obtain the desired length and width. The wood particle boards can be formed into panels, but can also be formed into molded particleboard products such as furniture parts. Furthermore, the wood particle boards may be sanded or planed before further processing. Further layers, such as e.g. decorative outer layers or further supporting layers, may be applied to the wood particle boards after pressing and cooling.

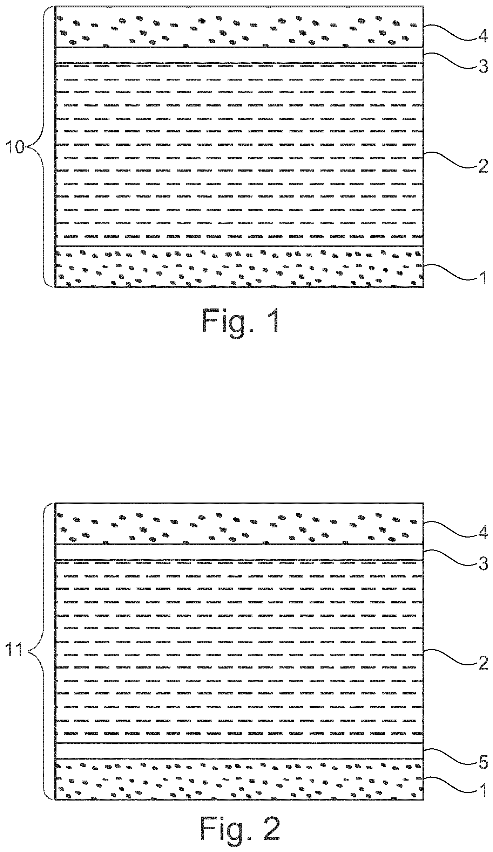

Fig. 1 shows a schematic representation of a first embodiment of the present invention. The wood particle board 10 according to the present embodiment comprises multiple layers arranged from bottom to top as follows: a bottom surface layer 1, a core layer 2, an interfoil 3 and a top surface layer 4.

In the depicted embodiment, the surface layers 1 and 4 are formed of small wood particles in order to provide a smooth, high-quality surface. Therein, both surface layers 1 and 4 may consist of wood particles with substantially the same size and mechanical properties, in order to ensure a balanced structure of the wood particle board and to prevent distortion or mechanical stress within the board. The surface layers 1 and 4 of the finished wood particle board may have a density above 700 kg/m³ in order to ensure sufficient stability of the overall wood particle board.

In the depicted embodiment, the interfoil 3 is arranged between the core layer 2 and the top surface layer 4. The interfoil 3 has a surface weight in the range of 5-600 g/m², preferably 5-200 g/m², most preferably 5-60 g/m². The interfoil 3 has a thickness in the range of 0.05-3 mm, preferably 0.05-2.0 mm, most preferably 0.05-2.0 mm. A key characteristic of the interfoil material may be that it has a certain vapour penetrability to ensure heat and steam transfer during the hot-pressing process. Gurley resistance may be used for determining the level of air resistance. For example the air resistance for the interfoil may be between 1.1-12 Gurley seconds. Preferably, the material may be mechanically stable up to about 240°C to withstand the hot-pressing process undamaged. Alternatively, the interfoil may be designed to be destroyed or melted during pressing or curing once the position of the wood particles in the respective layers of the wood particle board is fixed.

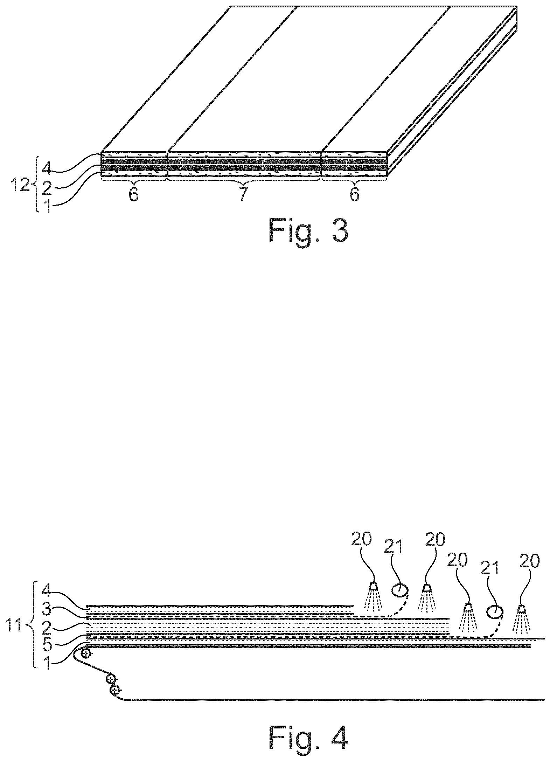

The interfoil 3 is formed of paper which has not been resin impregnated or of a perforated plastic sheet. In the first embodiment of Fig. 1, it is not necessary to provide additional adhesive agents on the interfoil 3. However, in another embodiment, the interfoil 3 could be treated with an adhesive agent to improve the bound of the interfoil 3 with the core layer 2 and the surface layer 4, as shown e.g. in Fig. 4 and described in detail below.

Due to the provision of the interfoil 3, the thickness of the surface layer 4 can be reduced compared to conventional wood particle boards, so that e.g. the thickness of each surface layer amounts to about 8% per side of the total board thickness, e.g. for an 11 mm board, each surface layer may be 0.7mm thick or for a 40 mm board, the thickness of each surface layer may be 2mm. Thus, the overall density and weight of the wood particle board can be reduced while ensuring a high surface quality.

The interfoil 3 is placed between the core layer 2 and the top surface layer 4 and thus prevents wood particles to move from the top surface layer 4 into the core layer 2, thereby providing a smooth and even surface of the surface layer 2. This embodiment can be used for various applications, e.g. providing a flawless exterior of furniture.

Due to the usage of an interfoil 3, the core layer 2 does not need to serve as a carrier of the fine surface particles. Hence, the core layer 2 can be produced with even lower density than in conventional wood particle boards, comprising even larger air pockets due to the use of larger wood particles in the core layer 2.

Fig. 2 shows a schematic representation of a second embodiment of the present invention. In comparison to the first preferred embodiment, the wood particle board 11 of the second embodiment comprises an additional interfoil 5 between the bottom surface layer 1 and the core layer 2.

The interfoils 3 and 5 are preferably provided with the same thickness, density and mechanical properties to ensure a balanced structure of the wood particle board 11 preventing distortion. Due to the symmetrical arrangement of all layers, interfoils 3 and 5 can be chosen which are thicker than the interfoil 3 in the first embodiment. Preferably, the thickness of each one of the interfoils 3 and 5 is in the range of 0.05-3 mm, preferably 0.05-2.5 mm, most preferably 0.05-2.0 mm.

The arrangement of two interfoils 3 and 5 provides two smooth and even surfaces of surface layers 1 and 4. This is needed only when the top interfoil is too thick, in order to keep the stability of board and in order to prevent the board bending due to the provision of a single, thick interfoil.

It may also be possible to apply veneers or other materials on top of the surface layer 1 and/or surface layer 4 to provide a decorative surface. The wood particle boards may also be finished with lacquer or paint, or may be treated with fire-resistant chemicals. Moreover, other materials like agricultural residues may be incorporated into the layers of the wood particle board.

The wood particle boards according to the embodiments described above may be produced in a continuous process or in a batch process. According to an embodiment of a continuous manufacturing method, wood particles may be coated with an adhesive agent. Subsequently, adhesive-coated wood particles may be deposited on a conveyor belt or the like in order to form the first surface layer 1 and the core layer 2. A vapour-permeable interfoil 3 may then be placed in top of the core layer, wherein e.g. the interfoil 3 is continuously supplied from a roll. On top of the interfoil 3, a top surface layer 4 of smaller adhesive-coated wood particles may be deposited. The finished stack of adhesive-coated wood particles, with the interfoil 3 provided therebetween, may then be conveyed into a continuous hot-pressing apparatus for forming the finished wood particle board 10.

As a modification of the method as described above, additional wood particle layers, such as e.g. an additional surface layer 1, may be deposited before or after deposition of the core layer particles as described above. Therein, a second interfoil 5 may be provided after deposition of an additional bottom surface layer 1, onto which the particles that form the core layer 2 are then deposited.

In summary, the embodiments as described above provide a wood particle board, wherein a core layer may be formed from large wood particles in order to achieve a low density of the finished board, and wherein at least one surface layer may be formed from smaller wood particles in order to achieve at least one smooth surface. The quality of the surface is ensured by providing an interfoil between the core layer and the at least one surface layer, wherein the interfoil prevents any movement from particles of the surface layer into the core layer and vice versa. Since the interfoil may be vapour-permeable, it may not affect a hot-pressing process during manufacture of the wood particle board. During hot-pressing, the interfoil adheres to the particles of the core and surface layers using the adhesive agent attached to the wood particles, so that it is generally not necessary to provide a further adhesive coating on the interfoil.

For some applications, it can be advantageous to provide a wood particle board with two high-quality surfaces. In this case, two interfoils on either side of a core layer can be provided. Additionally, interfoils with desired mechanical properties can be used for e.g. reinforcing wood particle boards while keeping the overall density of the board low. In this case, two interfoils may be used in order to achieve a balanced construction of the reinforced wood particle board.

Fig. 3 shows an illustrative example of another type of wood particle board 12, wherein one or two interfoils as described above may be used. The dual density wood particle board 12 comprises a core layer 2 sandwiched between first and second surface layers 1, 4 as described above. In addition to the features described above for wood particle boards 10, 11, the dual density wood particle board 12 depicted in Fig. 4 has a plurality of different regions 6, 7, wherein high density regions 6 are arranged in an alternating fashion with low density regions 7, e.g. as lengthwise stripes of alternating low and high density. Similar as described above for the wood particle boards 10, 11 of Fig. 1 and 2, one or two interfoil layers may be placed between the core layer 2 and respective surface layers 1, 4 of the dual density wood particle board 12 prior to hot pressing or curing. Thus, the interfoil as described above can be applied to a variety of different types of wood particles boards while still achieving the technical effects of ensuring a high surface quality and a lightweight construction of the wood particle board.

Fig. 4 is a schematic drawing for illustrating how additional adhesive can be applied to interfoil layers 3, 5 during deposition of the wood particle layers 1, 2, 4 of a wood particle board 11 as shown in Fig. 2.

Therein, the interfoil 3, 5 is supplied via respective rolls 21. A first interfoil layer 5 is provided on top of the deposited adhesive-coated wood particles of a first surface layer 1 as it is transported along a conveyor belt 22. An additional adhesive agent can be applied via respective spray nozzles 20 or the like to the top of the first surface layer 1 and to the top of the first interfoil layer 5. Thus, both surfaces of the first interfoil can be coated with a suitable adhesive in order to ensure a secure adhesion of the wood particle layers 1, 2 to the interfoil 5 while the adhesion of the wood particles within each surface or core layer is ensured by the adhesive that has been coated onto the respective wood particle prior to deposition of the layers. Similarly, for the second interfoil layer 3, spray nozzles 20 may be provided for coating the top of the deposited core layer 2 and the second interfoil layer 3 with adhesive before the wood particles of the second surface layer 4 are deposited on top of the second interfoil layer 3.

### Examples

Example embodiments of wood particle board compositions are with over all board density of 530 kg/m3, having particles of thickness between 0.2 and 0.8 mm with surface dimensions from 2 to 120mm in the width and having length of above 50 mm the core layer and finer particles passing mesh 1.6 x 1.6mm in the surface layer. As adhesive for the core layer standard polymeric MDI may be used and the adhesive content may be 3.2%. For the surface layer a traditional MUF resin with MR 0.95 and melamine content of 2.5% and adhesive content may be 14%. As interfoil e.g. a 17g/m2 paper may be used with air resistance of 2 Gurley seconds.

## Claims

1. Wood particle board (10; 11) comprising:
a core layer (2) formed of resin-covered wood particles with large particle size;
at least one surface layer (1, 4) formed of resin-covered wood particles, wherein the at least one surface layer (1, 4) comprises wood particles with particle sizes smaller than the particle sizes of the core layer (2); and
at least one interfoil (3, 5) disposed between a surface layer (1, 4) and the core layer (2), wherein the interfoil (3, 5) is formed of paper which has not been resin impregnated or of a perforated plastic sheet, and wherein the at least one interfoil (3, 5) has a surface weight in the range of 5 g/m² to 600 g/m² and a thickness in the range of 0.05 to 3 mm.

2. Wood particle board (10; 11) according to claim 1, wherein
the at least one interfoil (3, 5) is permeable to vapour.

3. Wood particle board (11) according to claim 1 or 2, wherein
the wood particle board (11) comprises two surface layers (1, 4) and two interfoils (3, 5) arranged on opposite surfaces of the core layer (2).

4. Wood particle board (10; 11) according to any one of claims 1 to 3, wherein
the at least one interfoil (3, 5) is adhered to the core and surface layers (1, 2, 4) by an adhesive agent provided in the core layer (2) and/or in the surface layer (1, 4).

5. Wood particle board (10; 11) according to any one of claims 1 to 4, wherein
the core layer (2) has a density below 500 kg/m³ and the at least one surface layer (1, 4) has a density above 700 kg/m³.

6. Method for producing a wood particle board (10; 11) comprising:
depositing wood particles with a small particle size and an adhesive agent to form a first surface layer (1);
depositing wood particles with a particle size larger than that of the first surface layer and an adhesive agent to form a core layer (2);
providing an interfoil (3) on top of the core layer (2), wherein the interfoil (3, 5) is formed of paper which has not been resin impregnated or of a perforated plastic sheet, and wherein the interfoil (3, 5) has a surface weight in the range of 5 g/m² to 600 g/m² and a thickness in the range of 0.05 to 3 mm;
depositing wood particles with particle sizes smaller than the particle sizes of the core layer (2) and an adhesive agent to form at least one second surface layer (4); and
compressing the deposited layers to form a wood particle board (10).

7. Method for producing a wood particle board (10; 11) according to claim 6, further comprising:
coating the wood particles with an adhesive agent before performing the steps of depositing the wood particles.

8. Method for producing a wood particle board (10; 11) according to claim 6or 7,
wherein
the interfoil (3) is adhered to the core and surface layers (1, 2, 4) by the adhesive agent provided in the core and surface layers (1, 2, 4).

9. Method for producing a wood particle board (10; 11) according to any one of claims 6 to 8, further comprising:
before depositing the wood particles and adhesive agent of the core layer (2),
depositing a first interfoil (5) on the first surface layer (1), wherein the core layer (2) is subsequently deposited on top of the first interfoil (5);
providing a second interfoil (3) on top of the core layer (2); and
depositing a second surface layer (4) on top of the second interfoil (3).

## Patentansprüche

1. Holzspanplatte (10; 11), umfassend:
eine Kernschicht (2), die aus harzbeschichteten Holzpartikeln mit großer Partikelgröße gebildet ist;
mindestens eine Oberflächenschicht (1, 4), die aus harzbeschichteten Holzpartikeln gebildet ist, wobei die mindestens eine Oberflächenschicht (1, 4) Holzpartikel mit Partikelgrößen umfasst, die kleiner als die Partikelgrößen der Kernschicht (2) sind; und
mindestens eine Zwischenfolie (3, 5), die zwischen einer Oberflächenschicht (1, 4) und der Kernschicht (2) angeordnet ist, wobei die Zwischenfolie (3, 5) aus Papier, das nicht harzimprägniert wurde, oder aus einer perforierten Kunststoffplatte gebildet ist, und wobei die mindestens eine Zwischenfolie (3, 5) ein Flächengewicht im Bereich von 5 g/m² bis 600 g/m² und eine Dicke im Bereich von 0,05 bis 3 mm aufweist.

2. Holzspanplatte (10; 11) nach Anspruch 1, wobei die mindestens eine Zwischenfolie (3, 5) dampfdurchlässig ist.

3. Holzspanplatte (11) nach Anspruch 1 oder 2, wobei die Holzspanplatte (11) zwei Oberflächenschichten (1, 4) und zwei Zwischenfolien (3, 5) umfasst, die auf gegenüberliegenden Oberflächen der Kernschicht (2) angeordnet sind.

4. Holzspanplatte (10; 11) nach einem der Ansprüche 1 bis 3, wobei die mindestens eine Zwischenfolie (3, 5) durch ein in der Kernschicht (2) und/oder in der Oberflächenschicht (1, 4) vorgesehenes Haftmittel an die Kern- und Oberflächenschichten (1, 2, 4) geklebt ist.

5. Holzspanplatte (10; 11) nach einem der Ansprüche 1 bis 4, wobei die Kernschicht (2) eine Dichte unter 500 kg/m³ aufweist und die mindestens eine Oberflächenschicht (1, 4) eine Dichte über 700 kg/m³ aufweist.

6. Verfahren zum Herstellen einer Holzspanplatte (10; 11), umfassend:
Ablagern von Holzpartikeln mit einer kleinen Partikelgröße und einem Haftmittel, um eine erste Oberflächenschicht (1) zu bilden;
Ablagern von Holzpartikeln mit einer Partikelgröße, die größer als die der ersten Oberflächenschicht ist, und einem Haftmittel, um eine Kernschicht (2) zu bilden;
Bereitstellen einer Zwischenfolie (3) oben auf der Kernschicht (2), wobei die Zwischenfolie (3, 5) aus Papier, das nicht harzimprägniert wurde, oder aus einer perforierten Kunststofffolie gebildet ist, und wobei die Zwischenfolie (3, 5) ein Flächengewicht im Bereich von 5 g/m² bis 600 g/m² und eine Dicke im Bereich von 0,05 bis 3 mm aufweist;
Ablagern von Holzpartikeln mit Partikelgrößen, die kleiner als die Partikelgrößen der Kernschicht (2) sind, und einem Haftmittel, um mindestens eine zweite Oberflächenschicht (4) zu bilden;
und
Komprimieren der abgelagerten Schichten, um eine Holzspanplatte (10) zu bilden.

7. Verfahren zum Herstellen einer Holzspanplatte (10; 11) nach Anspruch 6, ferner umfassend:
Beschichten der Holzpartikel mit einem Haftmittel vor dem Durchführen der Schritte des Ablagerns der Holzpartikel.

8. Verfahren zum Herstellen einer Holzspanplatte (10; 11) nach Anspruch 6 oder 7, wobei die Zwischenfolie (3) durch das in den Kern- und Oberflächenschichten (1, 2, 4) vorgesehene Haftmittel an die Kern- und Oberflächenschichten (1, 2, 4) geklebt ist.

9. Verfahren zum Herstellen einer Holzspanplatte (10; 11) nach einem der Ansprüche 6 bis 8, ferner umfassend:
vor dem Aufbringen der Holzpartikel und des Haftmittels der Kernschicht (2), Aufbringen einer ersten Zwischenfolie (5) auf der ersten Oberflächenschicht (1), wobei die Kernschicht (2) anschließend oben auf der ersten Zwischenfolie (5) aufgebracht wird;
Bereitstellen einer zweiten Zwischenfolie (3) oben auf der Kernschicht (2); und
Ablagern einer zweiten Oberflächenschicht (4) oben auf der zweiten Zwischenfolie (3).

## Revendications

1. Panneau de particules de bois (10 ; 11), comprenant :
une couche d'âme (2) formée de particules de bois recouvertes de résine ayant une grande taille de particules ;
au moins une couche de surface (1, 4) formée de particules de bois recouvertes de résine, dans lequel l'au moins une couche de surface (1, 4) comprend des particules de bois ayant des tailles de particules inférieures aux tailles de particules de la couche d'âme (2) ; et
au moins une feuille intercalaire (3, 5) disposée entre une couche de surface (1, 4) et la couche d'âme (2), où la feuille intercalaire (3, 5) est formée de papier n'ayant pas été imprégné de résine ou d'une feuille de plastique perforée, et où l'au moins une feuille intercalaire (3, 5) a un poids de surface compris dans la plage de 5 g/m² à 600 g/m² et une épaisseur comprise dans la plage de 0,05 à 3 mm.

2. Panneau de particules de bois (10 ; 11) selon la revendication 1, dans lequel l'au moins une feuille intercalaire (3, 5) est perméable à la vapeur.

3. Panneau de particules de bois (11) selon la revendication 1 ou la revendication 2, dans lequel le panneau de particules de bois (11) comprend deux couches de surface (1, 4) et deux feuilles intercalaires (3, 5) disposées sur des surfaces opposées de la couche d'âme (2).

4. Panneau de particules de bois (10 ; 11) selon l'une quelconque des revendications 1 à 3, dans lequel l'au moins une feuille intercalaire (3, 5) est collée aux couches d'âme et de surface (1, 2, 4) par un agent adhésif prévu dans la couche d'âme (2) et/ou dans la couche de surface (1, 4).

5. Panneau de particules de bois (10 ; 11) selon l'une quelconque des revendications 1 à 4, dans lequel la couche d'âme (2) a une densité inférieure à 500 kg/m³ et l'au moins une couche de surface (1, 4) a une densité supérieure à 700 kg/m³.

6. Procédé de production d'un panneau de particules de bois (10 ; 11), comprenant :
déposer des particules de bois ayant une petite taille de particules et un agent adhésif pour former une première couche de surface (1) ;
déposer des particules de bois ayant une taille de particules supérieure à celle de la première couche de surface et un agent adhésif pour former une couche d'âme (2) ;
disposer une feuille intercalaire (3) au-dessus de la couche d'âme (2), la feuille intercalaire (3, 5) étant formée de papier n'ayant pas été imprégné de résine ou d'une feuille de plastique perforée, et la feuille intercalaire (3, 5) ayant un poids de surface compris dans la plage de 5 g/m² à 600 g/m² et une épaisseur comprise dans la plage de 0,05 à 3 mm ;
déposer des particules de bois ayant des tailles de particules inférieures aux tailles de particules de la couche d'âme (2) et un agent adhésif pour former au moins une seconde couche de surface (4) ; et
compresser les couches déposées pour former un panneau de particules de bois (10).

7. Procédé de production d'un panneau de particules de bois (10 ; 11) selon la revendication 6, comprenant en outre l'étape consistant à revêtir les particules de bois d'un agent adhésif avant de mettre en œuvre les étapes de dépôt des particules de bois.

8. Procédé de production d'un panneau de particules de bois (10 ; 11) selon la revendication 6 ou la revendication 7, dans lequel la feuille intercalaire (3) est collée aux couches d'âme et de surface (1, 2, 4) par l'agent adhésif prévu dans les couches d'âme et de surface (1, 2, 4) .

9. Procédé de production d'un panneau de particules de bois (10 ; 11) selon l'une quelconque des revendications 6 à 8, comprenant en outre les étapes consistant à :
avant l'étape de dépôt des particules de bois et agent adhésif de la couche d'âme (2),
déposer une première feuille intercalaire (5) sur la première couche de surface (1), la couche d'âme (2) étant ensuite déposée au-dessus de la feuille intercalaire (5) ;
disposer une seconde feuille intercalaire (3) au-dessus de la couche d'âme (2) ; et
déposer une seconde couche de surface (4) au-dessus de la seconde feuille intercalaire (3).
